(19) Europäisches Patentamt
European Patent Office
Office européen des brevets

(11) EP 2 669 097 B1

(12) **EUROPEAN PATENT SPECIFICATION**

(45) Date of publication and mention
of the grant of the patent:
**14.03.2018 Bulletin 2018/11**

(21) Application number: **12739407.0**

(22) Date of filing: **19.01.2012**

(51) Int Cl.:
***B60C 11/00*** *(2006.01)*    ***B60C 9/08*** *(2006.01)*

(86) International application number:
**PCT/JP2012/000324**

(87) International publication number:
**WO 2012/101993 (02.08.2012 Gazette 2012/31)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2011 JP 2011015914**

(43) Date of publication of application:
**04.12.2013 Bulletin 2013/49**

(73) Proprietor: **Bridgestone Corporation
Tokyo 104-8340 (JP)**

(72) Inventor: **YANO, Takeshi
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**JP-A- 6 001 107        JP-A- 6 211 003
JP-A- 7 149 113        JP-A- 7 186 619
JP-A- 2004 122 904    JP-A- 2008 254 596
JP-A- 2010 179 776    JP-A- 2012 061 981
US-A- 4 262 721**

## Description

### TECHNICAL FIELD

The present invention relates to a pneumatic tire having at least one belt reinforcing layer which is disposed as circumscribing a carcass toroidally extending across a pair of bead potions, the carcass including at least one carcass ply, the belt reinforcing layer being obtained by extending a cord substantially in a tread circumferential direction. More particularly, the present invention relates to a pneumatic radial tire suited for use in an aircraft, and proposes a technology of effectively preventing the generation of partial wear in a shoulder land portion located in a tread shoulder region on a tread surface.

### BACKGROUND ART

Conventionally, as described in Patent Literature 1, this type of tires has at least one belt reinforcing layer that is disposed on the outer peripheral side of a carcass as circumscribing the carcass, for the purpose of suppressing bulging deformation of a tread rubber during, for example, high-speed driving, the belt reinforcing layer being configured by an extensionless cord such as an organic fiber cord and a steel cord, which exhibits high tensional stiffness even at the initial stage of stretching, the extensionless cord being disposed at an angle of 5° or less relative to the tread circumferential direction so as to extend substantially in the tread circumferential direction.

The use of the aforementioned belt reinforcing layer allows for the advantageous suppression of radial growth of the tire with a reduced number of layers, as compared to a belt layer formed by extending a cord at a large angle to the tread circumferential direction, even in the case of an aircraft tire which uses an extremely high internal pressure. As a result, the tire can be reduced in weight along with the reduced number of components used therein while exhibiting durability that is excellent enough even to satisfy the needs for aircraft tires, to thereby contribute to improving fuel efficiency of the vehicle.

US 4 262 721 A, corresponding with the preamble of claim 1, discloses a pneumatic aircraft tire with a radially varying tread contour.

### CITATION LIST

Patent Literature

PTL 1: JP 4424989 B

### SUMMARY OF INVENTION

(Technical Problem)

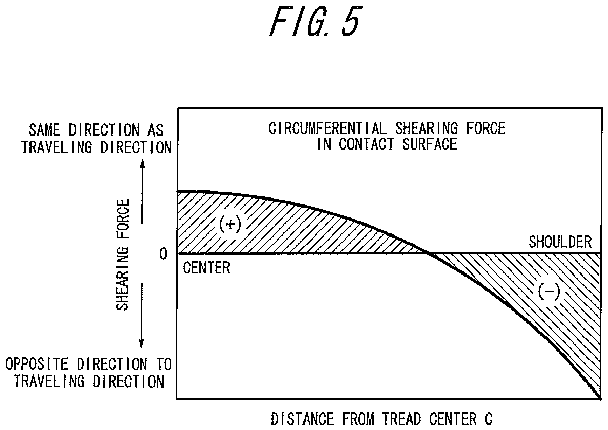

Meanwhile, in a pneumatic tire having an outer surface shape in which the tire outer diameter from the tire center axis to the tread surface gradually decreases from the tread center toward the tread shoulder, when the tire is rolling under load, the land portion surface of the tread center region is generally subjected to circumferential shearing force applied in a backward direction relative to the rotation direction of the tire, that is, in the traveling direction of the vehicle, while the land portion surface of the tread shoulder region is subjected to circumferential shearing force applied in a forward direction relative to the rotation direction of the tire, that is, in a direction opposite to the aforementioned traveling direction, as shown in a graph of FIG. 5 which shows the circumferential shearing force in a contact surface, in the tread width direction. In this case, when one or more belt reinforcing layers are disposed on the outer peripheral side of a carcass as in the aforementioned conventional tire, the belt reinforcing layer formed of an extensionless cord extending substantially in the tread circumferential direction may have a high stiffness in the circumferential direction but has a relatively small combined stiffness in the width direction, which produces a smaller effect of suppressing deformation resulting from the contact pressure in the tread portion, particularly in the tread center region, failing to reduce the difference in tire outer diameter between the tread center region and the tread shoulder region in a tire contact surface, leading to an increase of the circumferential shearing force applied to the shoulder land portion in a direction opposite to the traveling direction.

Then, a large circumferential shearing force acting on the shoulder land portion during when the tire is rolling under load leads to an increase in wear amount in the land portion surface of the shoulder land portion resulting from sliding relative to a road surface. Thus, when used under severe conditions in particular, the tire is subjected to early wear in the land portion in the tread shoulder region, along with which circumferential grooves defining the land portion also flattened out at an early stage, which requires the tire to be replaced despite that the land portion still remains in the tread center region, leading to a problem that the tire wear life expires over an extremely short period.

The present invention has been made to solve the aforementioned problems inherent in the conventional art, and has an object to provide a pneumatic tire which has at least one belt reinforcing layer formed by extending a cord substantially in a tread circumferential direction as circumscribing a carcass, to thereby attain weight reduction while exhibiting excellent diameter growth suppressing function, so as to allow for effective improvement in wear resistance of the tread surface.

(Solution to Problem)

The inventor of the present invention has made extensive studies shown in FIG, 5 on the distribution in the tread width direction of the circumferential shearing forces acting on the tread surface, and has found out that such distribution of the circumferential shearing force has a high correlation with the tire outer surface shape in the tire width direction, and that the tire outer surface shape of a conventional tire, which is formed of a smoothly-connected composite curve in a cross section in the tire width direction, can be approximated by a substantially single arc.

According to the findings, in a conventional tire having a substantially-arc shaped outer surface in the cross section in the tire width direction, the wear amount of the tread surface sees a sharp rise along with a gradual decrease of the tire outer diameter, from the tread center toward the shoulder side.

Then, the inventor has conceived that a tire outer surface shape which corresponds to the distribution shape of the circumferential shearing force in the cross section in the tire width direction may be selected so as to reduce the absolute value of the circumferential shearing force to act on the shoulder land portion, to thereby reduce the wear amount of the shoulder land portion and also improve the wear resistance performance of the tire.

Based on the aforementioned findings, a pneumatic tire according to the present invention includes:

a pair of bead portions;
a bead core disposed as being embedded in each of the bead portions;
a carcass formed of at least one carcass ply toroidally extending across the bead portions;
at least one belt reinforcing layer formed by extending a cord in a tread circumferential direction, the belt reinforcing layer being disposed on an outer peripheral side of a crown region of the carcass as circumscribing the carcass; and
a tread rubber disposed on an outer peripheral side of the belt reinforcing layer so as to form a tread surface,
the tread surface having, for example, four annular circumferential grooves formed therein, the annular circumferential grooves defining: a center land portion positioned in a center region of the tread surface; a shoulder land portion positioned in a tread shoulder region of the tread surface; and an intermediate land portion positioned between the center land portion and the shoulder land portion of the tread surface,
in which the pneumatic tire, which is configured to be in a tire posture where the tire is assembled to an applicable rim where it is filled to a pressure lower than a specified internal pressure whilst being capable of allowing the tire to maintain its shape (for example 50 kPa), has a land portion surface of the intermediate land portion positioned inward in the tire radial direction relative to a virtual arc circumscribing at least part of each of the land portion surface at the center position of the center land portion and the land portion surface of the shoulder land portion, in the cross section in the tire width direction, so that a step depth $\delta$ of the land portion surface of the intermediate land portion relative to the virtual arc satisfies the following relation across the entire area of the land portion surface of the intermediate land portion in the tire width direction;

$$r \,/\, 400 \leq \delta \leq r \,/\, 100,$$

where $r$ is the tire radius from the tire center axis at the center position of the center land portion,
in which the land portion surface of the intermediate land portion (20, 21) is uniformly positioned inward in the tire radial direction by the step depth $\delta$ relative to said virtual arc (A), and
the tire widthwise outer portions of the land portion surface of the center land portion are positioned inward in the tire radial direction relative to said virtual arc (A).

Here, "extending a cord in a tread circumferential direction" refers to disposing the cord at an angle of 5° or less relative to the tread circumferential direction so as to extend the cord substantially in the tread circumferential direction.

Further, the "center land portion" refers to a portion formed on a tire equatorial line in the cross section in the tire width direction.

Herein, the "applicable rim" refers to a rim specified to meet the following standard according to the tire size, the "specified internal pressure" refers to an air pressure specified correspondingly to the maximum load capacity, based on the following standard, and the "maximum load capacity" refers to a maximum mass allowed to be loaded onto the tire based on the following standard.

Then, the standard refers to the one specified based on an industrial standard effective in a region where the tire is produced or used, and may be exemplified by the one defined in a "YEARBOOK of THE TIRE AND RIM ASSOCIATION INC."

(Advantageous Effect of Invention)

According to the pneumatic tire of the present invention, in the cross section in the tire width direction of the tire in a predetermined posture, the land portion surface of the intermediate land portion is positioned inward in the tire radial direction relative to a virtual arc circumscribing at least part of each of the land portion surface at the center position of the center land portion and the land portion surface of the shoulder land portion, so that the tire outer surface shape becomes partially smaller on the land portion surface of the intermediate land portion by the step depth $\delta$ relative to the virtual arc. Accordingly, the circumferential shearing force to act on the tread surface, which has a high correlation with the tire outer surface shape, becomes smaller in decreasing gradient particularly in the tread shoulder region, so that an absolute value of the circumferential shearing force acting on the shoulder land portion can be effectively reduced, with the result that partial wear of the shoulder land portion resulting from the circumferential shearing force acting thereon can be effectively prevented, to thereby improve the wear resistance performance of the tire.

Here, the step depth $\delta$ of the land portion surface of the intermediate land portion relative to the virtual arc is defined to satisfy the following relation across the entire area of the land portion surface of the intermediate land portion in the tire width direction: $r / 400 \leq \delta \leq r / 100$, where $r$ is the tire radius from the tire center axis at the center position of the center land portion, in order to suppress increase in wear amount across the entire area of the tread surface, to thereby effectively increase the wear resistance performance sufficiently.

In other words, if the step depth $\delta$ of the land portion surface of the intermediate land portion is set to be less than $r / 400$, the step depth $\delta$ is too small to sufficiently reduce the decreasing gradient of the circumferential shearing force particularly in the tread shoulder region, which fails to make the circumferential shearing force to act on the shoulder land portion sufficiently small enough to suppress the generation of partial wear. On the other hand, if the step depth $\delta$ of the land portion surface of the intermediate land portion is set to be larger than $r / 100$, the center land portion is caused to project outward in the tire radial direction in the cross section in the tire width direction in contrast to the intermediate land portion deeply stepped down, which leads to an increase in wear amount in the center land portion.

BRIEF DESCRIPTION OF DRAWINGS

The present invention will be further described below with reference to the accompanying drawings, wherein:

FIG. 1 is a sectional view in the width direction of one embodiment of the present invention;
FIG. 2 is an enlarged sectional view in the width direction of a main part of the tire of FIG. 1;
FIG. 3 is a graph showing a tread width direction distribution of circumferential shearing force in a contact surface to act on the tread surface of the tire of FIG. 1;
FIG. 4 is a view of the main part of a conventional tire, similar to FIG. 2; and
FIG. 5 is a graph showing a tread width direction distribution of circumferential shearing force in a contact surface to act on the tread surface of a conventional tire.

DESCRIPTION OF EMBODIMENTS

Embodiments of the present invention will be described with reference to the accompanying drawings hereinafter.

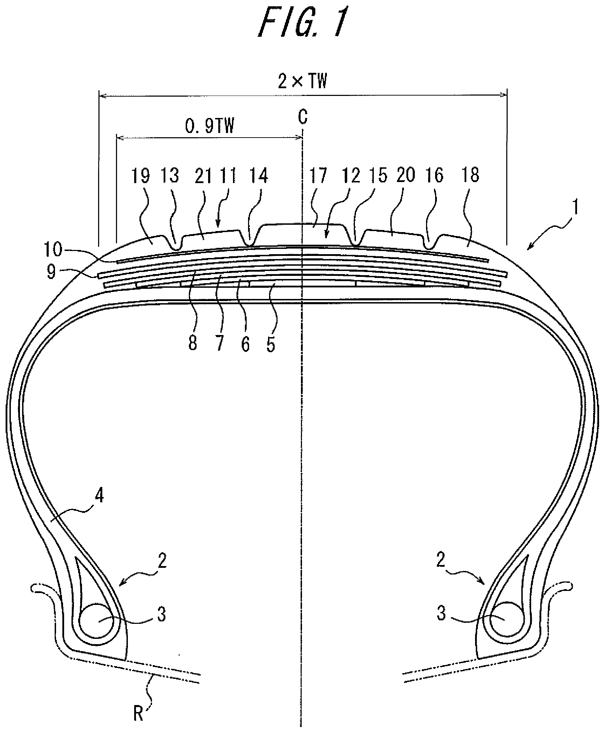

Exemplified in FIG. 1 is a tire 1 including: a pair of bead portions 2 each having a bead core 3 embedded therein; a carcass 4 formed of at least one carcass ply toroidally extending across the pair of bead portions 2; four belt reinforcing layers 5 to 8 each formed by extending a cord in the tread circumferential direction, the belt reinforcing layers each being disposed on the outer peripheral side of a crown region of the carcass 4 as circumscribing the carcass 4; a belt layer 9 disposed on the outer peripheral side of the belt reinforcing layers 5 to 8, the belt layer 9 being formed of a cord extended at an angle in the tread circumferential direction; a protection belt layer 10 disposed on the outer peripheral side of the belt layer 9, the protection belt layer 10 being formed of a cord extended in the tread circumferential direction; and a tread rubber 12 disposed on the outer peripheral side of the protection belt layer 10 to form a tread surface 11.

Here, the cords each forming the belt reinforcing layers 5 to 8, respectively, may be a steel cord, an organic cord, etc. In this case, the aforementioned extensionless cord that exhibits a high tensional stiffness even from the initial stage of stretching is extended substantially in the tread circumferential direction, so that the diameter growth of a tire during rolling under load can be sufficiently suppressed effectively with a reduced number of layers, with the result that the weight reduction of the tire itself, which improves fuel efficiency of a vehicle attached with the tire, and improved durability of the tire 1 can both be attained at high levels.

Here, the number of the belt reinforcing layers to be disposed may be one to three, or five or more.

Then, herein, four circumferential grooves 13 to 16 annularly extending in the tread circumferential direction are provided on the tread surface 11, to thereby define, for example, a center rib 17 formed as being positioned in a tread center region, shoulder ribs 18, 19 formed as being respectively positioned in each of the tread shoulder regions, and intermediate ribs 20, 21 each formed as being positioned between the center rib 17 and each of the shoulder ribs 18, 19, respectively.

Further, although not shown, the tread surface 11 may include, in addition to the annular circumferential grooves 13 to 16, a plurality of lateral grooves extending in the tread width direction to intersect with or open to the annular circumferential grooves, so as to define the tread pattern as a block pattern, rather than as the aforementioned rib pattern.

In the tire 1 having the belt reinforcing layers 5 to 8 disposed on the outer peripheral side of the carcass 4 as described above, the cords forming the belt reinforcing layers 5 to 8 provide the tread portion with high circumferential stiffness. As a result, the tread surface 11, particularly in the tread shoulder regions, is subjected to a large circumferential shearing force applied in a direction opposite to the traveling direction of the vehicle during when the tire 1 is rolling under load, leading to partial wear of the shoulder ribs 18, 19 resulting from sliding against a road surface, which shortens the wear life of the tire.

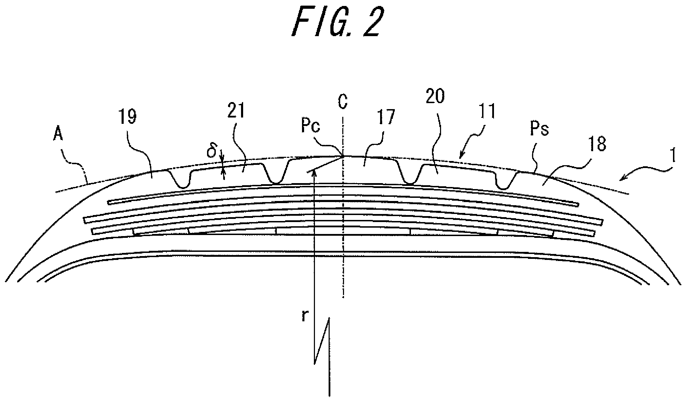

In view of the above, according to the present invention, in order to reduce the partial wear, the following configuration is adopted based on the findings that the tread width distribution of the circumferential shearing force acting on the tread surface 11 during when the tire 1 is rolling under load has a high correlation with the tire outer surface shape in the tire width direction. That is, a tire is configured to be in a tire posture where the tire is assembled to an applicable rim $R$ to be once filled to a specified internal pressure which is then reduced to a pressure capable of maintaining the tire shape, so that, in the cross section in the tire width direction of the tire in this posture, a virtual arc $A$ as illustrated in FIG. 2 is obtained which circumscribes the center position of the center rib 17, namely, a rib surface at a position $C$ of the tread center at a point contact $Pc$, and a rib surface of the shoulder rib 18 at a point of contact $Ps$ while having a center thereof on the tire rotation axis, with the rib surfaces of the intermediate ribs 20, 21 each being positioned more inward than the virtual arc $A$ in the tire radial direction.

More specifically, the intermediate ribs 20, 21 are configured to have a step depth $\delta$ relative to the virtual arc $A$, the step depth $\delta$ being defined to satisfy a relation of $r / 400 \leq \delta \leq r / 100$ where $r$ is the tire radius from the tire center axis at a position of the tread center $C$ of the center rib 17.

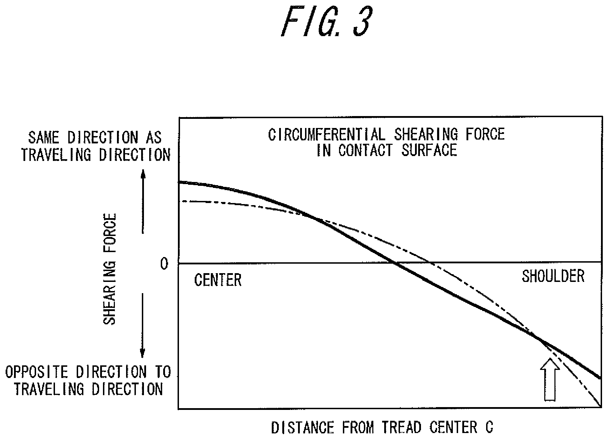

With this configuration, the tire outer diameter, which smoothly decreases gradually from the tread center $C$ toward the tread shoulder by approximating the virtual arc $A$, partially decreases midway therethrough by the step depth $\delta$ at each of the intermediate ribs 20, 21. Accordingly, as shown by the solid line in the graph of FIG. 3, the tread width direction distribution of the circumferential shearing force acting on the tread surface 11 has a smaller decreasing gradient particularly at the tread shoulder, with the result that the circumferential shearing force acting on each of the shoulder ribs 18, 19 becomes smaller in absolute value as indicated by the arrow in the graph, as compared to the conventional art which is illustrated by a virtual line in the figure.

Then, as a result thereof, partial wear to be generated in the shoulder land portions 18, 19 resulting from the action of the circumferential shearing force as mentioned above can be effectively suppressed, to thereby greatly improve the partial wear performance of the tire 1.

Here, although not shown, the circumferential grooves to be provided in the tread surface are not limited to the aforementioned four grooves, and there may be provided, for example, six circumferential grooves in the tread surface. In this case, two of the intermediate land portions are defined between the center land portion and each of the shoulder land portions.

Then, when the present invention is applied to a tire including a plurality of intermediate land portions between the center land portion and one of the shoulder land portions as described above, the land portion surfaces of these intermediate land portions are all uniformly positioned inward in the tire radial direction by the step depth $\delta$ relative to the virtual arc, in the cross section in the tire width direction.

Meanwhile, the carcass 4 may be formed of, for example, at least one carcass obtained by extending an organic fiber cord in a radial direction (at an angle of 70° to 90° relative to the tread circumferential direction). The radial carcass 4, which is not illustrated in detail, may toroidally extend from the tread portion to the bead portion 2 through the side portion, and be folded back, at both edge portions, outward in the tire width direction around each of the bead cores 3 forming a pair.

In the case illustrated in the drawing, the belt layer 9 disposed on the outer peripheral side of the belt reinforcing layers 5 to 8 may be formed of a steel cord, an organic fiber cord, or the like which is extended at an angle falling within a range of 2° to 45° relative to the tread circumferential direction. Further, the protection belt layer 10 disposed on the outer peripheral side of the belt layer 9 may be formed of a cord with high initial elongation such as Lang's lay steel cord, a high elongation steel cord, and an organic fiber cord, and may also be formed of a steel cord or an organic fiber cord that extends in a zig-zag shape, a crank shape, or a waved shape with respect to the tread circumferential direction.

Herein, although FIG. 1 illustrates only one belt layer 9 and one protection belt layer 10, the number of the belt layer 9 and of the protection belt layer 10 to be disposed may be two or more. Alternatively, none of the belt layers may be disposed.

EXAMPLES

Next, tires according to the present invention were prototyped, and were subjected to performance evaluation, the results of which are described below.

Test tires were all manufactured as aircraft tires in a size of 46 × 17R20 (30PR).

Example Tires 1 and 2 were both configured as illustrated in FIGS. 1 and 2, in which the intermediate ribs 20, 21 have the step depths $\delta$ which were each set to satisfy the relation of $r / 400 \leq \delta \leq r / 100$ but to be different from one another, as shown in Table 1.

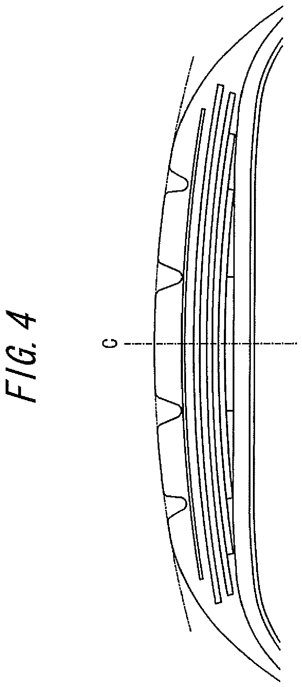

Conventional Example Tire was configured similarly to Example Tires 1 and 2, except that the intermediate ribs 20, 21 were not stepped down and each have the step depth $\delta$ of 0 as illustrated in FIG. 4.

Comparative Example Tire was configured similarly to Example Tires 1 and 2, except that the intermediate ribs 20, 21 each have the step depth $\delta$ of 8.0 mm that does not satisfy the aforementioned condition.

With the use of a wear characteristics testing machine, these test tires were subjected to measurement of a shear stress acting in the tire circumferential direction and a relative slide amount at a contact surface between the tire and a road surface, and the shear stress was multiplied with the slide amount to obtain a wear workload, which was integrated in the tire circumferential direction at each position in the tire width direction. Based on the integrated values obtained at these positions, the wear lives of the tread center region and of the tread shoulder region were each calculated as an index value.

More specifically, the aforementioned wear characteristics testing machine includes: a road surface movable in the tire traveling direction in a horizontal plane; and a tire press capable of applying vertical load to each test tire, the road surface being provided with a load cell and a camera each embedded therein, the load cell being formed in a pin shape at the tip thereof and capable of measuring forces in two directions of vertical and horizontal directions, the camera being capable of tracing, as an image, a slide direction and a slide amount of the tire passing therethrough, to thereby determine the shear stress and the slide amount by the load cell and the camera.

Herein, to measure and calculate the wear life of the tread shoulder region, a test tire was filled to a specified internal pressure defined by TRA and loaded with a specified load to have a tire footprint width of 2 × TW, and the measurement and calculation were performed with reference to a position away from the tread center in the tire width direction by 0.9 TW.

The results thereof are shown in Table 1, together with the specifications of each tire. It should be noted that Table 1 shows index values, which are increased to indicate longer wear life and more excellent wear resistance performance.

Here, the tire wear life shown in Table 1 is the smaller value selected from the value indicating the wear life of the tread center region and the value indicating the wear life of the tread shoulder region, respectively, the tire wear life being defined to indicate the time elapsed before the tire needed replacement.

[Table 1]

|  | Conventional Example Tire | Example Tire 1 | Example Tire 2 | Comparative Example Tire |
|---|---|---|---|---|
| Tread Surface | FIG. 4 | FIG. 2 | FIG. 2 | FIG. 2 |
| Tire Radius $r$ (mm) at Tread Center Position | 570 | 570 | 570 | 570 |
| $r / 400$ | 1.4 | 1.4 | 1.4 | 1.4 |
| $r / 100$ | 5.7 | 5.7 | 5.7 | 5.7 |
| Step depth $\delta$ (mm) | 0 | 2.0 | 5.0 | 8.0 |

(continued)

| | | Conventional Example Tire | Example Tire 1 | Example Tire 2 | Comparative Example Tire |
|---|---|---|---|---|---|
| Wear Resistance Performance | Center Wear life (index) | 106 | 104 | 100 | 93 |
| | Shoulder Wear Life (index) | 96 | 101 | 105 | 108 |
| | Tire Wear Life (index) | 96 | 101 | 100 | 93 |

As is apparent from Table 1, Example Tires 1 and 2 are each found to have a longer wear life both in the tread center region and in the tread shoulder region, as compared to Conventional Example Tire.

Further, Comparative Example Tire has a longer wear life in the shoulder region while having a shorter wear life in the center region, as compared to Example Tires 1 and 2, and thus found to have a shorter wear life as the tire as a whole.

Therefore, the pneumatic tire of the present invention has been found to be capable of being significantly improved in wear resistance performance.

REFERENCE SIGNS LIST

1          pneumatic tire
2          bead portion
3          bead core
4          carcass
5 to 8     belt reinforcing layer
9          belt layer
10         protection belt layer
11         tread surface
12         tread rubber
13 to 16   annular circumferential groove
17         center rib
18, 19     shoulder rib
20, 21     intermediate rib
R          rim
C          tread center
r          tire radius at tread center position
A          virtual arc
$\delta$          step depth
Pc, Ps     point of contact

**Claims**

1.  A pneumatic tire (1), comprising:

     a pair of bead portions (2);
     a bead core (3) disposed as being embedded in each of the bead portions;
     a carcass (4) formed of at least one carcass ply toroidally extending across the bead portions;
     at least one belt reinforcing layer (5, 6, 7, 8) formed by extending a cord in a tread circumferential direction, the belt reinforcing layer being disposed on an outer peripheral side of a crown region of the carcass as circumscribing the carcass; and
     a tread rubber (12) disposed on an outer peripheral side of the belt reinforcing layer so as to form a tread surface (11),

the tread surface having a plurality of annular circumferential grooves (13, 14, 15, 16) formed therein, the annular circumferential grooves defining: a center land portion (17) positioned in a center region of the tread surface; a shoulder land portion (18, 19) positioned in a tread shoulder region of the tread surface; and an intermediate land portion (20, 21) positioned between the center land portion and the shoulder land portion of the tread surface, wherein the pneumatic tire, which is configured to be in a tire posture where the tire is assembled to an applicable rim where it is filled to a pressure lower than a specified internal pressure whilst being capable of allowing the tire to maintain its shape, has a land portion surface of the intermediate land portion (20, 21) positioned inward in the tire radial direction relative to a virtual arc (A) circumscribing at least part of each of the land portion surface at the center position ($P_C$) of the center land portion (17) and the land portion surface of the shoulder land portion (18, 19), in a cross section in the tire width direction, so that a step depth $\delta$ of the land portion surface of the intermediate land portion relative to the virtual arc satisfies the following relation across the entire area of the land portion surface of the intermediate land portion in the tire width direction;

$$r / 400 \leq \delta \leq r / 100,$$

where $r$ is the tire radius from the tire center axis at the center position of the center land portion; **characterized in that**:
the land portion surface of the intermediate land portion (20, 21) is uniformly positioned inward in the tire radial direction by the step depth $\delta$ relative to said virtual arc (A); and
the tire widthwise outer portions of the land portion surface of the center land portion are positioned inward in the tire radial direction relative to said virtual arc (A).

2. The pneumatic tire according to claim 1, wherein the virtual arc (A) circumscribes the land portion surface of the center land portion 17 only at a tread center position ($P_C$).

3. The pneumatic tire according to claim 1 or 2, wherein the virtual arc (A) circumscribes the land portion surface of the shoulder land portion (18, 19) only at a single point of contact ($P_S$).

4. The pneumatic tire according to any preceding claim, wherein said pressure capable of allowing the tire to maintain its shape is 50 kPa.

## Patentansprüche

1. Luftreifen (1), umfassend:

ein Paar Wulstabschnitte (2);
einen Wulstkern (3), welcher so angeordnet ist, dass er in jedem der Wulstabschnitte eingebettet ist;
eine Karkasse (4), welche aus zumindest einer Karkassenlage gebildet ist, welche sich torusförmig über die Wulstabschnitte erstreckt;
zumindest eine Gürtelverstärkungsschicht (5, 6, 7, 8), welche durch Erstrecken eines Kords in einer Laufflächenumfangsrichtung gebildet ist, wobei die Gürtelverstärkungsschicht auf einer äußeren Umfangsseite eines Kronenbereichs der Karkasse angeordnet ist, wobei die Karkasse umschlossen wird; und
ein Laufflächengummi (12), welches auf einer äußeren Umfangsseite der Gürtelverstärkungsschicht angeordnet ist, um eine Lauffläche (11) zu bilden,
wobei die Lauffläche eine Mehrzahl von darin geformten ringförmigen Umfangsrillen (13, 14, 15, 16) aufweist,
wobei die ringförmigen Umfangsrillen definieren: einen mittleren Stegabschnitt (17), welcher in einem mittleren Bereich der Lauffläche angeordnet ist; einen Schulterstegabschnitt (18, 19), welcher in einem Laufflächenschulterbereich der Lauffläche angeordnet ist; und einen zwischenliegenden Stegabschnitt (20, 21), welcher zwischen dem mittleren Stegabschnitt und dem Schulterstegabschnitt der Lauffläche angeordnet ist,
wobei der Luftreifen, welcher konfiguriert ist, um eine Reifenstellung einzunehmen, wo der Reifen auf einer geeigneten Felge montiert ist, in welcher er bei einem Druck gefüllt ist, welcher unterhalb eines inneren vorbestimmten Druckes liegt, bei welchem der Reifen jedoch seine Form aufrechterhält, eine Stegabschnittfläche des zwischenliegenden Stegabschnitts (20, 21) aufweist, welche einwärts in der Reifenradialrichtung relativ zu einem virtuellen Bogen (A) angeordnet ist, welcher zumindest einen Teil jeder von der Stegabschnittfläche in der mittleren Position des mittleren Stegabschnitts (17) und von der Stegabschnittfläche des Schulterstegabschnitts (18, 19) in einem Querschnitt in der Reifenbreitenrichtung umschließt, sodass die Stufentiefe δ der Stegabschnittfläche des zwischenliegenden Stegabschnitts relativ zum virtuellen Bogen die folgende Beziehung über die gesamte Oberfläche der Stegabschnittfläche des zwischenliegenden Stegabschnitts in der Reifenbreitenrichtung erfüllt:

$$r/400 \leq \delta \leq r/100,$$

wobei

r der Reifenradius von der Reifenmittelachse in der mittleren Stellung des mittleren Stegabschnitts ist; **dadurch gekennzeichnet, dass**
die Stegabschnittfläche des zwischenliegenden Stegabschnitts (20, 21) gleichmäßig einwärts in der Reifenradialrichtung um die Stufentiefe δ relativ zum virtuellen Bogen (A) angeordnet ist; und
die äußeren Abschnitte in der Reifenbreitenrichtung der Stegabschnittfläche des mittleren Stegabschnitts einwärts in der Reifenradialrichtung relativ zum virtuellen Bogen (A) angeordnet sind.

2. Luftreifen nach Anspruch 1, wobei der virtuelle Bogen (A) die Stegabschnittfläche des mittleren Stegabschnitts 17 nur in einer mittleren Position ($P_C$) der Lauffläche umschließt.

3. Luftreifen nach Anspruch 1 oder 2, wobei der virtuelle Bogen (A) die Stegabschnittsfläche des Schulterstegabschnitts (18, 19) nur in einem einzelnen Berührungspunkt ($P_S$) umschließt.

4. Luftreifen nach einem der vorhergehenden Ansprüche, wobei der Druck, welcher die Reifenform aufrechterhält 50 kPa beträgt.

**Revendications**

1. Bandage pneumatique (1), comprenant :

une paire de parties de talon (2) ;
une tringle (3) disposée de sorte à être noyée dans chacune des parties de talon ;
une carcasse (4) comprenant au moins une nappe de carcasse s'étendant toroïdalement à travers les parties de talon ;
au moins une couche de renforcement de la ceinture (5, 6, 7, 8) formée par extension d'un câblé dans une direction circonférentielle de la bande de roulement, la couche de renforcement de la ceinture étant agencée sur un côté périphérique externe d'une partie de sommet de la carcasse, entourant la carcasse ; et
une gomme de bande de roulement (12) disposée sur un côté périphérique externe de la couche de renforcement de la ceinture de sorte à former une surface de la bande de roulement (11) ;
la surface de la bande de roulement comportant plusieurs rainures circonférentielles annulaires (13, 14, 15, 16) qui y sont formées, les rainures circonférentielles annulaires définissant : une partie d'appui centrale (17) positionnée dans une région d'épaulement de la bande de roulement de la surface de la bande de roulement ; et une partie d'appui intermédiaire (20, 21) positionnée entre la partie d'appui centrale et la partie d'appui d'épaulement de la surface de la bande de roulement ;
dans lequel le bandage pneumatique, configuré de sorte à se trouver dans une position dans laquelle le bandage pneumatique est assemblé sur une jante applicable et rempli à une pression inférieure à une pression interne spécifiée, tout en étant capable de permettre au bandage pneumatique de maintenir sa forme, comporte une surface de partie d'appui de la partie d'appui intermédiaire (20, 21) positionnée vers l'intérieur, dans la direction radiale du bandage pneumatique, par rapport à un arc virtuel (A) entourant au moins une partie de chacune des surfaces de partie d'appui, au niveau d'une position centrale ($P_c$) de la partie d'appui centrale (17), et de la surface de partie d'appui de la partie d'appui d'épaulement (18, 19), dans une section transversale dans la direction de la largeur du bandage pneumatique, de sorte qu'une profondeur de gradin δ de la surface de la partie d'appui de la partie d'appui intermédiaire, par rapport à l'arc virtuel, satisfait la relation ci-dessous à travers l'ensemble de l'aire de la surface de partie d'appui de la partie d'appui intermédiaire, dans la direction de la largeur du bandage pneumatique :

$$r \; /400 \leq \; \delta \; \leq r \, / \, 100,$$

où $r$ représente le rayon du bandage pneumatique, à partir de l'axe central du bandage pneumatique, au niveau de la position centrale de la partie d'appui centrale ; **caractérisé en ce que** :

la surface de partie d'appui de la partie d'appui intermédiaire (20, 21) est positionnée de manière uniforme vers l'intérieur, dans la direction radiale du bandage pneumatique, à la profondeur de gradin $\delta$, par rapport audit arc virtuel (A) ; et

les parties externes, dans le sens de la largeur du bandage pneumatique, de la surface de partie d'appui de la partie d'appui centrale sont positionnées vers l'intérieur dans la direction radiale du bandage pneumatique par rapport audit arc virtuel (A).

2. Bandage pneumatique selon la revendication 1, dans lequel l'arc virtuel (A) entoure la surface de partie d'appui de la partie d'appui centrale (17) uniquement au niveau d'une partie centrale de la bande de roulement (Pc).

3. Bandage pneumatique selon les revendications 1 ou 2, dans lequel l'arc virtuel (A) entoure la surface de partie d'appui de la partie d'appui d'épaulement (18, 19) uniquement au niveau d'un seul point de contact (Ps).

4. Bandage pneumatique selon l'une quelconque des revendications précédentes, dans lequel ladite pression capable de permettre au bandage pneumatique de maintenir sa forme correspond à 50 kPa.

# FIG. 1

# FIG. 2

EP 2 669 097 B1

## FIG. 3

SAME DIRECTION AS
TRAVELING DIRECTION

OPPOSITE DIRECTION TO
TRAVELING DIRECTION

SHEARING FORCE

0

CIRCUMFERENTIAL SHEARING FORCE
IN CONTACT SURFACE

CENTER

SHOULDER

DISTANCE FROM TREAD CENTER C

## FIG. 4

FIG. 5

SAME DIRECTION AS
TRAVELING DIRECTION

SHEARING FORCE

0

OPPOSITE DIRECTION TO
TRAVELING DIRECTION

CIRCUMFERENTIAL SHEARING FORCE
IN CONTACT SURFACE

(+)

SHOULDER

CENTER

(−)

DISTANCE FROM TREAD CENTER C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4262721 A

- JP 4424989 B